# EUROPEAN PATENT APPLICATION

(11) **EP 4 335 939 A1**
(43) Date of publication of application: **13.03.2024**
(21) Application number: 22816009.9
(22) Date of filing: 27.05.2022
(51) Int. Cl.: C21D 8/12, C22C 38/00, C22C 38/60, H01F 1/147

(54) **METHOD FOR MANUFACTURING ORIENTED ELECTRICAL STEEL SHEET**

(30) Priority: 31.05.2021 JP 2021090799
(71) Applicant: JFE Steel Corporation, Tokyo 100-0011 (JP)
(72) Inventor: TAKENAKA, Masanori, Tokyo 100-0011 (JP); IMAMURA, Takeshi, Tokyo 100-0011 (JP); TAKAHASHI, Mari, Tokyo 100-0011 (JP); FUJITA, Noriki, Tokyo 100-0011 (JP)
(74) Representative: Grünecker Patent- und Rechtsanwälte PartG mbB
(86) International application number: PCT/JP2022/021773
(87) International publication number: WO 2022/255259

(57) **Abstract**

Proposed is a method for producing a grain-oriented electrical steel sheet having no occurrence of ridging and an excellent shape. The method for producing a grain-oriented electrical steel sheet includes: heating a steel slab containing, in mass%, C: 0.02 to 0.10%, Si: 2.5 to 5.5%, Mn: 0.01 to 0.30%, sol. Al: 0.010 to 0.040%, and N: 0.004 to 0.020%, and at least one of S and Se in a total amount of 0.0010 to 0.040%; subsequently performing hot rolling; performing hot-band annealing as necessary; performing cold rolling either once or two or more times with intermediate annealing between each rolling to obtain a cold-rolled sheet having a final sheet thickness; performing primary recrystallization annealing which also serves as decarburization annealing; and performing finishing annealing. In the method for producing a grain-oriented electrical steel sheet, the heating temperature for the slab is 1300°C or higher. In the rough rolling of the hot rolling, one of rolling passes is performed in the temperature range of 1200°C or higher, and subsequently, a next rolling pass is performed in an opposite direction after a time interval of 5 seconds or longer, with a total rolling reduction of the rough rolling achieved 75% or higher.

## Description

### Technical Field

The present invention relates to a method for producing a so-called grain-oriented electrical steel sheet in which crystal grains are highly integrated into the {110} orientation on the sheet surface and in the <001> orientation in the rolling direction, in terms of miller indices.

### Background Art

Grain-oriented electrical steel sheets are soft magnetic materials and are widely used mainly as iron cores of electrical devices such as transformers. These grain-oriented electrical steel sheets exhibit excellent magnetic properties, such as low iron loss and high magnetic flux density by causing the high integration of the crystal grains into the { 110} <001> orientation (hereinafter, "Goss orientation") by using secondary recrystallization. Indicators for evaluation of magnetic properties of grain-oriented electrical steel sheets generally used include a magnetic flux density B₈ (T) at a magnetic field intensity of 800 (A/m), and an iron loss W_{17/50} per kilogram of a steel sheet (W/kg) caused by magnetization up to 1.7 (T) in an alternating current magnetic field at an excitation frequency of 50 (Hz).

A method for producing such a grain-oriented electrical steel sheet generally used involves preferentially growing only Goss-oriented grains by causing fine precipitates called an inhibitor to precipitate in finishing annealing, which provides mobility differences to grain boundaries. For example, Patent Literature 1 discloses a method using an inhibitor such as AlN and MnS, whereas Patent Literature 2 discloses a method using an inhibitor such as MnS and MnSe, both of which have industrially been put into practical use. These methods using the inhibitor are ideally conducted under a state where the inhibitors are finely and uniformly dispersed. To this end, it is considered necessary to heat a steel slab that serves as a material to a high temperature of 1300°C or higher before performing hot rolling.

Whereas, heating a slab at a high temperature for a long period leads to a problem of coarsening the crystal texture, which promotes non-uniformity of the texture. To cope with this problem, a method that heats a slab to a high temperature of approximately 1300°C to 1450°C in a short time, as disclosed in Patent Literature 3, is becoming mainstream. Examples of the slab heating method include induction heating and electric heating disclosed in Patent Literature 4 and Patent Literature 5. This technique not only makes it possible to prevent the coarsening of the crystal texture but also allows the slabs to be processed individually, which increases the flexibility of hot rolling opportunities, resulting in benefits for production efficiency, equipment construction costs, and maintenance/management costs.

Grain-oriented electrical steel sheets typically contain approximately 2.5 mass% Si. Si is a ferrite stabilizer element, which is unlikely to cause austenite transformation even in a high-temperature range. This results in ferrite accounting for the majority of a texture. Further, ferrite is less likely to cause recrystallization in hot rolling, causing the majority of hot-rolled sheets for grain-oriented electrical steel sheets to have non-recrystallized textures. When a hot-rolled sheet having such a non-recrystallized texture undergoes cold rolling, undulation in vertical stripe called "ridging" that runs parallel to the rolling direction occurs after the cold rolling, possibly causing troubles such as meandering in a looper or breakage while the steel sheet is threading on the line. It may also cause a final product sheet to exhibit deviation in sheet thicknesses, resulting in degradation of product quality or a low space factor when a transformer or the like is assembled by laminating the steel sheets. For these reasons, inhibiting ridging is one of the important problems to be solved.

It is considered that ridging occurs due to the non-uniformity of crystal texture, and therefore uniformization of the crystal texture, i.e., promotion of recrystallization and finer crystal grains is recognized as being effective. Techniques for inhibiting ridging include, for example, Patent Literature 6 to 10. Patent Literature 6 discloses a technique that aims at actively promoting the austenite transformation during hot rolling by increasing the amount of Mn in the steel. Patent Literature 7 proposes a method that aims to promote recrystallization by performing high-reduction rolling in the temperature range of 1190 to 960°C. Patent Literature 8 proposes a method that performs high-reduction rolling of 30% or more at a temperature of 1230 to 960°C while an austenite phase is contained by 3% or more. Patent Literature 9 proposes a method that restricts the temperature for rough rolling to 1250°C or lower. Patent Literature 10 proposes a method in which rolling is conducted in the temperature range of 1050 to 1200°C at a strain rate of 15 per second or less with a rolling reduction of 15% per pass or more.

Patent Literature 11 proposes a method that performs the first pass of rough rolling in the temperature range of 1350°C or higher with a rolling reduction of 3% or higher but lower than 20% and the second pass in the rough rolling with a high rolling reduction. Patent Literature 12 proposes a method that performs the first and the second pass of rough rolling with a high rolling reduction. Patent Literature 12 to 15 each propose a method that aims to prevent bad textures from occurring in widthwise end parts in the sheet width direction by ensuring the accumulative rolling reduction of rough rolling to be lower than 75%; the rolling reduction in the final rolling of the rough rolling to be lower than 50%; and the sheet thickness center temperature of a rough sheet bar immediately after the final rolling to be 1350°C or higher.

### Citation List

### Patent Literature

Patent Literature 1: JP-S40-015644A
Patent Literature 2: JP-A51-013469A
Patent Literature 3: JP-S60-190520A
Patent Literature 4: Japanese Utility Model Publication No. 58-024397
Patent Literature 5: JP-S60-145318A
Patent Literature 6: JP-H01-119644A
Patent Literature 7: JP-S54-120214A
Patent Literature 8: JP-S55-119126A
Patent Literature 9: JP-S57-011614A
Patent Literature 10: JP-S59-093828A
Patent Literature 11: JP-H03-115526A
Patent Literature 12: JP-H03-115527A
Patent Literature 13: JP-2020-169366A
Patent Literature 14: JP-2020-169367A
Patent Literature 15: JP-2020-169368A

### Summary of Invention

### Technical Problem

According to Patent Literature 6, however, using such an inhibitor as MnS or MnSe, which are unlikely to be dissolved during slab heating, cannot form a fine inhibitor during hot rolling sufficiently, failing to achieve high magnetic properties stably. Patent Literature 7 to 10 propose techniques that all aim to form finer textures by conducting high-reduction rolling in the temperature range near 1200°C under a common technical concept that not rolling at a high temperature but large strain application in a low-temperature recrystallization zone contributes to recrystallization. However, these techniques hardly improve the ridging condition. While Patent Literature 11 and 12 propose techniques that both aim to form finer textures by performing high-reduction rolling in a high temperature range and have been confirmed to be effective in forming finer texture to a certain extent, these techniques are not able to eliminate ridging. Patent Literature 13 to 15 propose techniques that all aim to eliminate portions with poor magnetic properties but have an adverse effect in inhibiting ridging.

The present invention was made in view of the problems of the conventional techniques described above and aims to propose a method capable of producing a grain-oriented electrical steel sheet in good shape without causing ridging.

### Solution to Problem

The present inventors have intensively studied to solve the abovementioned problems by focusing on the rough rolling process in the hot rolling. As a result, we have discovered that ridging can be significantly prevented by performing any one of the rolling passes in the rough rolling of the hot rolling in the temperature range of 1200°C or higher, and after 5 seconds or longer has elapsed, performing the next rolling pass in the opposite direction with the total rolling reduction of the rough rolling of 75% or more achieved.

The present invention based on the above knowledge proposes a method for producing a grain-oriented electrical steel sheet characterized by including:
heating a steel slab having an ingredient composition containing C: 0.02 to 0.10 mass%, Si: 2.5 to 5.5 mass%, Mn: 0.01 to 0.30 mass%, sol. Al: 0.010 to 0.040 mass%, N: 0.004 to 0.020 mass%, and at least one of S and Se in a total amount of 0.001 to 0.040 mass% with a remaining part comprising Fe and inevitable impurities;
hot rolling the slab;
subjecting the hot-rolled sheet to, optionally, hot-band annealing and then to one cold rolling or two or more cold rollings with an intermediate annealing between each cold rolling to form a cold-rolled sheet with a final sheet thickness;
subjecting the cold-rolled sheet to primary recrystallization annealing which also serves as decarburization annealing;
applying an annealing separator to the steel sheet surface; and
subjecting the sheet to finishing annealing, wherein
the slab is heated to 1300°C or higher;
in rough rolling of the hot rolling, any one of the rolling passes is conducted in the temperature range of 1200°C or higher, and after 5 seconds or longer has elapsed, the next rolling pass is performed in the opposite direction, with the total rolling reduction of the rough rolling of 75% or more achieved.

In the method for producing a grain-oriented electrical steel sheet of the present invention, after the hot rolling, the hot-band annealing is performed by heating the sheet at an average heating rate of 1°C/s or higher between 600°C and 800°C and holding the sheet in the temperature range of 800 to 1250°C.

The method for producing a grain-oriented electrical steel sheet of the present invention is characterized by further including:
a hot rolling step including heating a steel slab, performing rough rolling of one or more passes in the temperature range of 1100 to 1400°C, performing finishing rolling of two or more passes in the temperature range of 800 to 1300°C to obtain a hot-rolled sheet, and winding the sheet into a coil at a winding temperature of 400 to 750°C;
optionally, a hot-band annealing step including holding the hot-rolled sheet in the temperature range of 800 to 1250°C for 5 seconds or longer and then cooling the sheet at a rate of 5 to 100°C/s between 800 and 350°C;
a cold rolling step including one cold rolling performed so that a total rolling reduction falls within the range of 50 to 92%, or including two or more cold rollings performed so that a total rolling reduction at the final cold rolling for obtaining the final sheet thickness falls within the range of 50 to 92%;
optionally, an intermediate annealing step including holding the sheet in the temperature range of 800 to 1250°C for 5 seconds or longer and then cooling the sheet at a rate of 5 to 100°C/s between 800 and 350°C;
a primary recrystallization annealing step serving as decarburization annealing including holding the sheet in the temperature range of 750 to 950°C for 10 seconds or longer under a wet atmosphere containing H₂ and N₂ and having a dew point of 20 to 80°C;
an annealing separator applying step including applying an annealing separator mainly composed of MgO to a surface of the steel sheet in an amount of 3 g/m² or more per surface; and
a finishing annealing step that includes purification where the sheet is held at a temperature of 1050°C to 1300°C for 3 hours or longer and that uses an H₂-containing atmosphere for a part of the temperature range of 800°C or higher including at least the purification.

The method for producing a grain-oriented electrical steel sheet of the present invention is characterized in that the steel slab to be used contains, in addition to the above ingredient composition, at least one selected from the group consisting of Ni: 0 to 1.00 mass%, Sb: 0 to 0.50 mass%, Sn: 0 to 0.50 mass%, Cu: 0 to 0.50 mass%, Cr: 0 to 0.50 mass%, P: 0 to 0.50 mass%, Mo: 0 to 0.50 mass%, Nb: 0 to 0.020 mass%, V: 0 to 0.010 mass%, B: 0 to 0.0025 mass%, Bi: 0 to 0.50 mass%, and Zr: 0 to 0.10 mass%.

The method for producing a grain-oriented electrical steel sheet of the present invention is characterized in that the steel slab contains, in addition to the ingredient composition, at least one selected from the group consisting of Co: 0 to 0.0500 mass% and Pb: 0 to 0.0100 mass%.

The method for producing a grain-oriented electrical steel sheet of the present invention is characterized in that the steel slab contains, in addition to the ingredient composition, at least one selected from the group consisting of As: 0 to 0.0200 mass%, Zn: 0 to 0.0200 mass%, W: 0 to 0.0100 mass%, Ge: 0 to 0.0050 mass%, and Ga: 0 to 0.0050 mass%.

### Advantageous Effects of Invention

The present invention can provide a grain-oriented electrical steel sheet with excellent magnetic properties and shape.

### Brief Description of Drawings

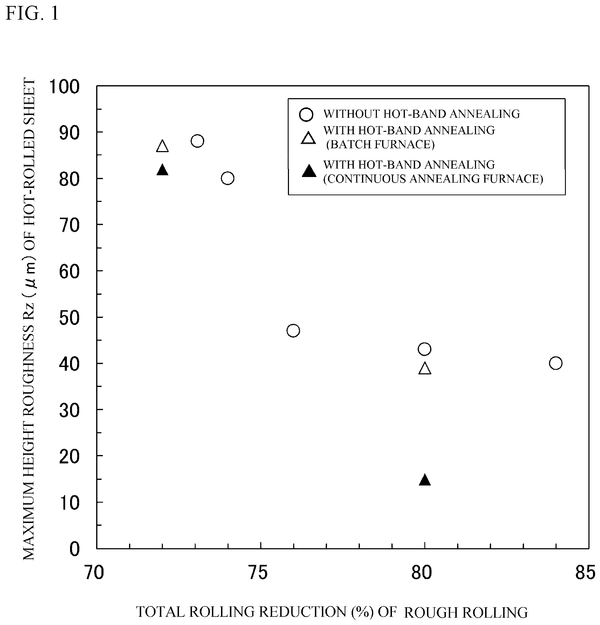

FIG. 1 is a graph showing influences of the total rolling reduction of rough rolling and the hot-band annealing conditions on a maximum height roughness Rz of a hot-rolled sheet.

### Description of Embodiments

Experiments that helped the development of the present invention will be described.

### <Experiment 1>

Eight steel slabs of 260 mm thickness were prepared for steel produced with an ingredient composition containing the following ingredients: C: 0.05 mass%, Si: 3.2 mass%, Mn: 0.09 mass%, S: 0.002 mass%, Se: 0.020 mass%, sol. Al: 0.025 mass%, and N: 0.007 mass% with the remaining part including Fe and inevitable impurities. The slab was then heated to 1350°C and subjected to three passes of hot rough rolling. Table 1 shows the rolling direction, rolling temperature, and sheet thickness after the rolling for each pass and the total rolling reduction of the rough rolling. The sheet was then subjected to 7 passes of hot finishing rolling to form a hot-rolled sheet of 2.2 mm thickness, cooled with water, and wound into a coil at a temperature of 600°C.

The ridging of each hot-rolled sheet obtained as above was evaluated as follows. The front and rear surfaces of the hot-rolled sheet were each shaved by 0.1 mm and polished with #600 abrasive paper. A JIS No. 5 test specimen for a tensile test was taken from the sheet such that the rolling direction was the tensile direction of the test specimen and underwent tensile deformation to the nominal strain of 20% at room temperature at a strain rate of 1×10⁻³. Subsequently, with respect to a central part in the longitudinal direction of a parallel part of the test specimen after the tensile test, a surface roughness curve was measured along the width direction of a portion of 10 mm at the center in the width direction by a laser microscope (with a laser spot diameter of 0.2 µm). The interval between a top line and a bottom line was measured by drawing an average line from the roughness curves obtained and was determined as a maximum height roughness (Rz). The results are shown in Table 1. The value Rz is an index for the degree of ridging. A larger Rz indicates a higher degree of ridging, while a smaller Rz indicates that the ridging is more inhibited.

Table 1 shows that when any one of the passes of the rough rolling in the hot rolling was performed at 1200°C or higher and, after a time interval of 5 seconds or longer, the next rolling pass was performed in the opposite direction at 1200°C or higher, the Rz value after the tensile test of the hot-rolled sheet reached 50 µm or lower, showing that ridging was significantly prevented.

The present inventors believe the reason why performing the rough rolling under the conditions described above significantly inhibits the ridging of the hot-rolled sheet as follows:
Although a grain-oriented electrical steel sheet mainly of ferrite is unlikely to be recrystallized after hot rolling, the recrystallization becomes easier when the rough rolling is performed at a high temperature. Further, by allowing the time interval of 5 seconds or longer after the rolling pass, strain energy introduced in the pass causes recrystallization partially to form finer texture while the rolled texture, in which strain energy is hard to accumulate, remains unchanged at that time. When the next rolling pass is performed in the opposite direction under such a condition, strain energy accumulates more effectively even in the rolled texture where the strain energy is unlikely to accumulate than when the rolling passes were performed in only one direction. As a result, the recrystallization texture occupies a greater proportion after the rolling passes, forming a finer hot-rolled sheet texture. We believe that a hot-rolled sheet having such a fine texture experiences a uniform plastic flow in the width direction during the cold rolling, which strongly prevents ridging generation.

**[Table 1]**

| Nº | Rough rolling items | Slab thickness (mm) | Rough rolling conditions | | | | Rz(µm) of hot-rolled sheet | Magnetic flux density B₈ (T) of product sheet | Remarks |
|---|---|---|---|---|---|---|---|---|---|
| | | | 1st pass | 2nd pass | 3rd pass | Total rolling reduction (%) | | | |
| A | Rolling direction | 260 | → | → | → | 80.8 | 88 | 1.82 | Comparative Example |
| | Rolling temperature(°C) | | 1240 | 1220 | 1200 | | | | |
| | Sheet thickness after rolling (mm) | | 170 | 100 | 50 | | | | |
| | Time after previous pass (s) | | - | 20 | 20 | | | | |
| B | Rolling direction | 260 | → | ← | → | 80.8 | 72 | 1.82 | Comparative Example |
| | Rolling temperature(°C) | | 1180 | 1160 | 1140 | | | | |
| | Sheet thickness after rolling (mm) | | 170 | 100 | 50 | | | | |
| | Time after previous pass (s) | | - | 20 | 20 | | | | |
| C | Rolling direction | 260 | → | ← | → | 80.8 | 70 | 1.84 | Comparative Example |
| | Rolling temperature (°C) | | 1200 | 1180 | 1160 | | | | |
| | Sheet thickness after rolling (mm) | | 170 | 100 | 50 | | | | |
| | Time after previous pass(s) | | - | 20 | 20 | | | | |
| D | Rolling direction | 260 | → | ← | → | 80.8 | 83 | 1.83 | Comparative Example |
| | Rolling temperature(°C) | | 1240 | 1220 | 1200 | | | | |
| | Sheet thickness after rolling (mm) | | 170 | 100 | 50 | | | | |
| | Time after previous pass(s) | | - | 2 | 2 | | | | |
| E | Rolling direction | 260 | → | ← | → | 80.8 | 68 | 1.83 | Comparative Example |
| | Rolling temperature (°C) | | 1240 | 1220 | 1200 | | | | |
| | Sheet thickness after rolling (mm) | | 170 | 100 | 50 | | | | |
| | Time after previous pass (s) | | - | 4 | 4 | | | | |
| F | Rolling direction | 260 | → | ← | → | 80.8 | 43 | 1.87 | Invention Example |
| | Rolling temperature (°C) | | 1220 | 1200 | 1180 | | | | |
| | Sheet thickness after rolling (mm) | | 170 | 100 | 50 | | | | |
| | Time after previous pass (s) | | - | 20 | 20 | | | | |
| G | Rolling direction | 260 | → | ← | → | 80.8 | 44 | 1.87 | Invention Example |
| | Rolling temperature (°C) | | 1240 | 1220 | 1200 | | | | |
| | Sheet thickness after rolling (mm) | | 170 | 100 | 50 | | | | |
| | Time after previous pass (s) | | - | 5 | 5 | | | | |
| H | Rolling direction | 260 | → | ← | → | 80.8 | 37 | 1.88 | Invention Example |
| | Rolling temperature (°C) | | 1240 | 1220 | 1200 | | | | |
| | Sheet thickness after rolling (mm) | | 170 | 100 | 50 | | | | |
| | Time after previous pass (s) | | - | 20 | 20 | | | | |

| | | | | | | | | | |
|---|---|---|---|---|---|---|---|---|---|
| NOTE: -> AND <- INDICATE THE OPPOSITE ROLLING DIRECTIONS. | | | | | | | | | |

Next, a grain-oriented electrical steel sheet was produced from the hot-rolled sheet obtained as described above and subjected to an experiment to evaluate the magnetic properties as a product sheet as follows.

The hot-rolled sheet was pickled to remove surface scales and cold-rolled to form a cold-rolled sheet with a final sheet thickness (product sheet thickness) of 0.23 mm. The cold-rolled sheet was then subjected to primary recrystallization annealing which also served as decarburization annealing at 820°C for 60 seconds under a wet atmosphere containing H₂ and N₂ with a dew point of 60°C. An annealing separator composed mainly of MgO was applied to the steel sheet surface with a coating weight of 3 g/m² per surface and dried. Then, finishing annealing was performed by causing secondary recrystallization and carrying out purification at 1150°C for 20 hours. An atmosphere composed mainly of H₂ was used in the temperature range of 1 100°C or higher of the finishing annealing. After removing the unreacted annealing separator from the surface of the steel sheet resulting from the finishing annealing, a phosphate-based insulation tension coating was applied to the surface, and flattening annealing which also served as the baking of the coating and steel sheet shape correction was carried out to form a product sheet.

Test specimens for the measurement of magnetic properties were taken from both the innermost and the outermost winding parts of the thus-obtained product coil to measure the magnetic flux density B₈ at a magnetic force of 800 Aim according to the method defined by JIS C 2550-1 (2011). The lowest value of the magnetic flux density of each coil was determined as a coil-specific guaranteed value. Table 1 shows the results as well. From these results, it can be seen that the product sheets using the hot-rolled sheets produced by conducting any one of the passes of the rough rolling in the hot rolling at 1200°C or higher and, after a time interval of 5 seconds or longer, conducting the next rolling pass in the opposite direction at 1200°C or higher, give an excellent magnetic flux density of B₈ ≥ 1.87 T.

The present inventors believe that the reason why the product sheets subjected to the rough rolling under the above condition achieved excellent magnetic flux density is that the rough rolling conducted under the above condition formed finer hot-rolled sheet texture to uniformize the texture, so that Goss-oriented grains with a uniform orientation can easily develop secondary recrystallization in the finishing annealing.

### <Experiment 2>

Eight steel slabs of a thickness of 260 mm were prepared for steel produced with an ingredient composition containing the following ingredients: C: 0.08 mass%, Si: 3.0 mass%, Mn: 0.08 mass%, S: 0.008 mass%, Se: 0.015 mass%, sol. Al: 0.015 mass%, and N: 0.008 mass% with the remaining part including Fe and inevitable impurities. The slab was then heated to 1380°C and underwent four passes of hot rough rolling. Table 2 shows the rolling direction, rolling temperature, and sheet thickness after the rolling for each pass and the total rolling reduction of the rough rolling. The sheet was then subjected to 6 passes of hot finishing rolling to form a rolled sheet of a thickness of 2.8 mm, cooled with water, and wound into a coil at a temperature of 500°C. As shown in Table 2, some of the hot-rolled sheet were subjected to hot-band annealing in a batch annealing furnace or continuous annealing furnace. The hot-band annealing in the batch annealing furnace was carried out such that the steel sheet was heated up to 900°C at an average heating rate of 20 °C/hr from 600 to 800°C, held for 20 hours, and cooled, while the hot-band annealing in the continuous annealing furnace was carried out such that the steel sheet was heated up to 900°C at an average heating rate of 5 °C/hr from 600 to 800°C, held for 120 seconds, and then cooled from 800 to 350°C at 60 °C/hr.

The degree of ridging of each of the hot-rolled sheets and hot-band annealed sheets obtained as above was evaluated in the same manner as in Experiment 1, and the value Rz obtained was also shown in Table 2. FIG. 1 shows the influences of the total rolling reduction of the rough rolling and the hot-band annealing conditions on a maximum height roughness Rz of a hot-rolled sheet. As can be seen from these results, Rz after the tensile test of the hot-rolled sheet reached 50 µm or less by conducting any one of the passes of the rough rolling in the hot rolling at 1200°C or higher and, after a time interval of 5 seconds or longer, conducting the next rolling pass in the opposite direction at 1200°C or higher with the total rolling reduction of the rough rolling in the hot rolling of 75 % or more achieved, which further prevents the ridging generation. Also, conducting the hot-band annealing in the continuous annealing furnace allows Rz after the tensile test of the hot-band annealed sheet to become 20 µm or less, showing that ridging can be further prevented.

The present inventors believe that the reason why controlling the total rolling reduction of the rough rolling of the hot rolling to 75 % or more can significantly prevent the ridging of the hot-rolled sheet is as follows:
As described above, we believe that finer hot-rolled sheet texture can be obtained by conducting any one of the rolling passes of the rough rolling in the hot rolling at 1200°C or higher and, after a time interval of 5 seconds or longer, conducting the next rolling pass in the opposite direction at 1200°C or higher. Further, the above effect is enhanced by controlling the total rolling reduction of the rough rolling to 75 % or more. As a result, the recrystallization texture occupies a greater proportion, forming a finer hot-rolled sheet texture.

The present inventors believe the reason why performing the hot-band annealing by continuous annealing significantly inhibits the ridging of the hot-rolled sheet as follows:
When the hot-band annealing is performed in a batch annealing furnace, the recovery progresses before reaching a recrystallization temperature range due to the low heating rate. This leads to a decrease in strain energy and a loss of driving force for the recrystallization, failing to increase the recrystallization ratio. Whereas, when the hot-band annealing is performed in a continuous annealing furnace, the strain energy is maintained up to a high temperature range where the recrystallization occurs, due to the high heating rate, enhancing the driving force for the recrystallization. This significantly increases the recrystallization ratio, allowing crystal grains to be finer.

It is believed that the effect of increasing the recrystallization ratio by performing hot-band annealing in a continuous annealing furnace is additionally realized only when any one of the rolling passes in the rough rolling of the hot rolling is performed at 1200°C or higher and the next rolling pass is performed in the opposite direction at 1200°C or higher after a time interval of 5 seconds or longer. Unless this condition is satisfied, the accumulation of strain energy in the processed/recovering texture included in the hot-rolled sheet texture is too small to achieve an increase in the recrystallization ratio even if hot-band annealing is performed in a continuous annealing furnace.

We believe that the hot-rolled sheet having a fine texture including such a recrystallization texture in abundance and the hot-band annealed sheet subjected to the hot-band annealing in a continuous annealing furnace experience a uniform plastic flow in the width direction during the cold rolling, strongly preventing ridging generation.

**[Table 2]**

| No. | Rough rolling items | Slab thickness (mm) | Rough rolling conditions | | | | | Hot-band annealing | Rz (µ) of hot-rolled sheet or hot-band annealed sheet | Magnetic flux density B₈ (T) of product sheet | Remarks |
|---|---|---|---|---|---|---|---|---|---|---|---|
| | | | 1 st pass | 2nd pass | 3rd pass | 4th pass | Total rolling reduction (%) | | | | |
| I | Rolling direction | 260 | → | ← | → | ← | 73.1 | Not conducted | 88 | 1.83 | Comparative Example |
| | Rolling temperature (°C:) | | 1240 | 1220 | 1200 | 1180 | | | | | |
| | Sheet thickness after rolling (mm) | | 190 | 140 | 100 | 70 | | | | | |
| | lime after previous pass(s) | | - | 10 | 10 | 10 | | | | | |
| J | Rolling direction | 260 | → | ← | → | ← | 75.0 | Not conducted | 80 | 1.84 | Comparative Example |
| | Rolling temperature(°C) | | 1240 | 1220 | 1200 | 1180 | | | | | |
| | Sheet thickness after rolling (mm) | | 190 | 140 | 100 | 65 | | | | | |
| | lime after previous pass(s) | | - | 10 | 10 | 10 | | | | | |
| K | Rolling direction | 260 | → | ← | → | ← | 76.9 | Not conducted | 47 | 1.87 | Invention Example |
| | Rolling temperature(°C) | | 1240 | 1220 | 1200 | 1180 | | | | | |
| | Sheet thickness after rolling (mm) | | 190 | 140 | 100 | 60 | | | | | |
| | Time after previous pass(s) | | - | 10 | 10 | 10 | | | | | |
| L | Rolling direction | 260 | → | ← | → | ← | 80.8 | Not conducted | 43 | 1.87 | Invention Example |
| | Rolling temperature(°C) | | 1240 | 1220 | 1200 | 1180 | | | | | |
| | Sheet thickness after rolling (mm) | | 190 | 140 | 90 | 50 | | | | | |
| | lime after previous pass(s) | | - | 10 | 10 | 10 | | | | | |
| M | Rolling direction | 260 | → | ← | → | ← | 84.6 | Not conducted | 40 | 1.87 | Invention Example |
| | Rolling temperature(°C) | | 1240 | 1220 | 1200 | 1180 | | | | | |
| | Sheet thickness after rolling (mm) | | 180 | 130 | 80 | 40 | | | | | |
| | lime after previous pass(s) | | - | 10 | 10 | 10 | | | | | |
| N | Rolling direction | 260 | → | ← | → | ← | 73.1 | Conducted (batch furnace) | 87 | 1.83 | Comparative Example |
| | Rolling temperature(°C) | | 1240 | 1220 | 1200 | 1180 | | | | | |
| | Sheet thickness after rolling (mm) | | 190 | 140 | 100 | 70 | | | | | |
| | Time after previous pass(s) | | - | 10 | 10 | 10 | | | | | |
| O | Rolling direction | 260 | → | ← | → | ← | 73.1 | Conducted (continuous annealing furnace) | 82 | 1.85 | Comparative Example |
| | Rolling temperature(°C) | | 1240 | 1220 | 1200 | 1180 | | | | | |
| | Sheet thickness after rolling (mm) | | 190 | 140 | 100 | 70 | | | | | |
| | lime after previous pass(s) | | - | 10 | 10 | 10 | | | | | |
| P | Rolling direction | 260 | → | ← | → | ← | 80.8 | Conducted (batch furnace) | 39 | 1.87 | Invention Example |
| | Rolling temperature(°C) | | 1240 | 1220 | 1200 | 1180 | | | | | |
| | Sheet thickness after rolling (mm) | | 190 | 140 | 90 | 50 | | | | | |
| | Time after previous pass(s) | | - | 10 | 10 | 10 | | | | | |
| Q | Rolling direction | 260 | → | ← | → | ← | 80.8 | Conducted (continuous annealing furnace) | 15 | 1.89 | Invention Example |
| | Rolling temperature(°C) | | 1240 | 1220 | 1200 | 1180 | | | | | |
| | Sheet thickness after rolling (mm) | | 190 | 140 | 90 | 50 | | | | | |
| | lime after previous pass(s) | | - | 10 | 10 | 10 | | | | | |

| | | | | | | | | | | | |
|---|---|---|---|---|---|---|---|---|---|---|---|
| NOTE: → AND ← INDICATE THE OPPOSITE ROLLING DIRECTIONS.) | | | | | | | | | | | |

Next, a grain-oriented electrical steel sheet was produced from the hot-rolled sheet obtained as described above and subjected to an experiment to evaluate the magnetic properties as a product sheet as follows.

The hot-rolled sheet was pickled to remove surface scales and cold-rolled to form a cold-rolled sheet with a final sheet thickness (product sheet thickness) of 0.27 mm. The cold-rolled sheet was then subjected to primary recrystallization annealing which also served as decarburization annealing at 800°C for 180 seconds under a wet atmosphere containing H₂ and N₂ with a dew point of 55°C. An annealing separator composed mainly of MgO was applied to the steel sheet surface with a coating weight of 7 g/m² per surface and dried. Then, finishing annealing was performed by causing secondary recrystallization and carrying out purification at 1200°C for 20 hours. An atmosphere composed mainly of H₂ was used in the temperature range of 850°C or higher of the finishing annealing. After removing the unreacted annealing separator from the surface of the steel sheet resulting from the finishing annealing, a phosphate-based insulation tension coating was applied to the surface, and flattening annealing which also served as the baking of the coating and flattening of the steel sheet was carried out to form a product sheet.

Test specimens for the measurement of magnetic properties were taken from both the innermost and the outermost winding parts of the thus-obtained product coil to measure the magnetic flux density B₈ at a magnetic force of 800 Aim according to the method defined by JIS C 2550-1 (2011). The lowest value of the magnetic flux density of each coil was determined as a coil-specific guaranteed value. Table 2 shows the results as well. From these results, it can be seen that the product sheets using the hot-rolled sheets produced by conducting any one of the passes of the rough rolling in the hot rolling at 1200°C or higher and, after a time interval of 5 seconds or longer, conducting the next rolling pass in the opposite direction at 1200°C or higher, with the total rolling reduction of the rough rolling in the hot rolling of 75 % or more achieved, exhibit an excellent magnetic flux density of B₈ ≥ 1.87 T. The product sheets produced by performing hot-band annealing in a continuous annealing furnace could achieve a more excellent magnetic flux density of B₈ ≥ 1.90 T.

The present inventors believe that the reason why the product sheets subjected to the rough rolling under the above condition archived excellent magnetic flux density is that the rough rolling conducted under the above condition formed finer hot-rolled sheet texture to uniformize the texture, so that Goss-oriented grains with a uniform orientation can easily develop secondary recrystallization in the finishing annealing.

Next, the ingredient composition required for the steel material (a slab) used for producing a grain-oriented electrical steel sheet of the present invention will be described.

### C: 0.02 to 0.10 mass%

C is an ingredient necessary for improving the hot-rolled sheet texture by using an austenite-ferrite transformation that occurs during the hot rolling and the soaking in the hot-band annealing. The C content of less than 0.02 mass% causes a grain boundary strengthening effect of C to be lost and causes a defect, such as a slab crack, that hinders production. Whereas, the C content exceeding 0.10 mass% not only increases the load of the decarburization but also causes incomplete decarburization itself, which may cause magnetic aging in the product sheet. For these reasons, the C content should fall within the range of 0.02 to 0.10 mass%, preferably within the range of 0.03 to 0.08 mass%.

### Si: 2.5 to 5.5 mass%

Si is an ingredient extremely effective for enhancing the specific resistance of steel and decreasing eddy-current loss that constitutes a part of iron loss. When Si content is less than 2.5 mass%, however, the decreasing effect is too small to achieve good iron loss properties. Although the specific resistance of steel monotonously increases until the Si content reaches 11 mass%, when Si content exceeds 5.5 mass%, workability becomes significantly low, and the production including the rolling becomes difficult. For these reasons, the Si content should fall within the range of 2.5 to 5.5 mass%, preferably within the range of 3.0 to 4.0 mass%.

### Mn: 0.01 to 0.30 mass%

Mn is an important ingredient in the production of grain-oriented electrical steel sheets because Mn forms MnS and MnSe, and functions as an inhibitor that inhibits the growth of normal grains during the temperature increasing process in the finishing annealing. When the Mn content is less than 0.01 mass%, however, the absolute amount of the inhibitor becomes insufficient, and the power to inhibit the growth of the normal grains becomes insufficient. On the contrary, when the Mn content exceeds 0.30 mass%, it is difficult to achieve sufficient dissolution at the time of the slab heating, which deteriorates the magnetic properties. For these reasons, the Mn content should be kept in the range of 0.01 to 0.30 mass%, and preferably in the range of 0.05 to 0.20 mass%.

### S and Se: at least one of the two in a total amount of 0.001 to 0.040 mass%

When coupled with Mn, S and Se form MnS and MnSe, respectively, both of which serve as an inhibitor. However, when the total content amount is less than 0.001 mass%, the amount of the inhibitor becomes insufficient, failing to obtain the effect for improving the magnetic properties. Whereas, when the total content amount exceeds 0.040 mass%, it becomes difficult to achieve sufficient dissolution in the slab heating, which greatly deteriorates the magnetic properties. Also, when the content amount of S exceeds 0.040 mass%, edge cracks will occur during the hot rolling. Therefore, in order to satisfy both the magnetic properties and producibility, the total content amount of S and Se should be kept in the range of 0.001 to 0.040 mass%, preferably in the range of 0.002 to 0.015 mass%.

### sol. Al: 0.010 to 0.040 mass%

Al forms AlN and is precipitated, functioning as an inhibitor which inhibits the growth of the normal grains in the secondary recrystallization annealing. Thus, Al is an important ingredient in grain-oriented electrical steel sheets. When the content amount of Al in the form of acid-soluble Al (sol. Al) is less than 0.010 mass%, however, the absolute amount of the inhibitor becomes insufficient, and the power to inhibit the growth of the normal grains becomes insufficient. On the contrary, when the content amount of sol. Al exceeds 0.040 mass%, sufficient dissolution into the steel cannot be achieved at the time of the slab heating, and fine dispersion into the steel cannot be achieved, significantly deteriorating the magnetic properties. For these reasons, the content amount of Al in the form of sol. Al should be kept in the range of 0.010 to 0.040 mass%, preferably in the range of 0.015 to 0.030 mass%.

### N: 0.004 to 0.020 mass%

N is coupled with Al and precipitated to form AlN that serves as an inhibitor. When the content amount is less than 0.004 mass%, however, the absolute amount of the inhibitor is insufficient, and the power to inhibit the growth of the normal grains is insufficient. Whereas, when the content amount exceeds 0.020 mass%, the slab might be blistered in the hot rolling. For these reasons, the content amount of N should be kept in the range of 0.004 to 0.020 mass%, preferably in the range of 0.006 to 0.010 mass%.

In addition to the requisite ingredients described above, to enhance the magnetic properties, the steel material used in the present invention may contain at least one selected from the group consisting of: Ni: 0 to 1.00 mass%, Sb: 0 to 0.50 mass%, Sn: 0 to 0.50 mass%, Cu: 0 to 0.50 mass%, Cr: 0 to 0.50 mass%, P: 0 to 0.50 mass%, Mo: 0 to 0.50 mass%, Nb: 0 to 0.020 mass%, V: 0 to 0.010 mass%, B: 0 to 0.0025 mass%, Bi: 0 to 0.50 mass%; and Zr: 0 to 0.10 mass%. If any of the ingredients exceeds the abovementioned upper limit value, the development of secondary recrystallization grains is inhibited, deteriorating the magnetic properties instead. From the viewpoint of further improving the magnetic properties, it is desirable to add the ingredients in the following amounts: Ni: 0.01 mass% or more, Sb: 0.005 mass% or more, Sn: 0.005 mass% or more, Cu: 0.01 mass% or more, Cr: 0.01 mass% or more, P: 0.005 mass% or more, Mo: 0.005 mass% or more, Nb: 0.001 mass% or more, V: 0.001 mass% or more, B: 0.0002 mass% or more, Bi: 0.005 mass% or more, and Zr: 0.001 mass% or more.

To improve the magnetic properties, the steel material used in the present invention may contain, in addition to the ingredient composition described above, at least one selected from the group consisting of Co: 0 to 0.0500 mass% and Pb: 0 to 0.0100 mass%. If any of the ingredients exceeds the abovementioned upper limit value, the development of secondary recrystallization grains is inhibited, deteriorating the magnetic properties instead. Further, from the viewpoint of surely enhancing the magnetic properties, it is desirable to add the ingredients in the following amounts: Co: 0.0020 mass% or more and Pb: 0.0001 mass% or more.

In addition to the ingredient composition described above, for the purpose of enhancing the magnetic properties, the steel material used in the present invention may contain at least one selected from the group consisting of As: 0 to 0.0200 mass%, Zn: 0 to 0.0200 mass%, W: 0 to 0.0100 mass%, Ge: 0 to 0.0050 mass%, and Ga: 0 to 0.0050 mass%. If any of the ingredients exceeds the abovementioned upper limit value, the development of secondary recrystallization grains is inhibited, deteriorating the magnetic properties instead. Further, from the viewpoint of further enhancing the magnetic properties, it is desirable to add the ingredients in the following amounts: As: 0.0010 mass% or more, Zn: 0.0010 mass% or more, W: 0.0010 mass% or more, Ge: 0.0001 mass% or more, and Ga: 0.0001 mass% or more.

Ti is a harmful ingredient that forms a nitride and damages the inhibitor effect of AlN and is thus preferably reduced as little as possible. Although reducing Ti increases the refining costs, 0.010 mass% or less Ti can be acceptable. A more preferable content amount is 0.0020 mass% or less.

In the steel slab used in the present invention, the remaining part other than the abovementioned ingredients is Fe and inevitable impurities. In this context, the term "inevitable impurities" denotes components that inevitably enter from raw materials, scrap, a ladle for steel production, and so on, at the time of the production of steel.

Next, a method for producing a grain-oriented electrical steel sheet of the present invention will be described.

The steel material (the slab) used for producing a grain-oriented electrical steel sheet according to the present invention may be produced by melting steel with the abovementioned ingredient composition through an ordinary publicly-known refining process and then by a commonly known method such as an ingot-making method or a continuous casting method. Alternatively, it is also acceptable to produce a thin cast piece with a thickness of 100 mm or less by a direct casting method.

The slab or the thin cast piece described above is heated by an ordinary method and then subjected to hot rolling. It is desirable that the slab heating temperature before the hot rolling is 1300°C or higher so that the inhibitor-forming ingredients are completely dissolved in the steel.

The heated slab is subjected to hot rolling including rough rolling and finishing rolling.

The rough rolling in the hot rolling involves at least one rough rolling performed in the temperature range of 1100 to 1400°C. A characteristic of the present invention lies in that any one of the rolling passes in the rough rolling is performed in the temperature range of 1200°C or higher, and after a time interval of 5 seconds or longer, the next rolling pass is performed in the opposite direction, with the total rolling reduction of the rough rolling of 75% or more achieved. By carrying out rough rolling in accordance with the above condition the formation of ridging in the subsequent steps can be prevented, which can reduce the risk of causing the threading trouble in the production line and prevent the deterioration of the surface quality of the final product sheet. As a result, it is possible to reduce the risk of lowering the space factor when assembling a transformer or the like by laminating the steel sheets. Furthermore, the rolling pass in the opposite direction as described above is preferably conducted at 1200°C or higher.

Finishing rolling subsequent to the rough rolling is preferably carried out in two or more passes in the range of 800 to 1300°C to optimize the texture of the hot-rolled sheet. From the viewpoint of both controlling carbide structures and preventing defects including cracks, the temperature when winding into a coil after the finishing rolling is preferably in the range of 400 to 750°C, more preferably 500 to 700°C.

For a more uniform steel sheet texture and less variation in the magnetic properties, it is preferable to carry out hot-band annealing by holding the steel sheet (hot-rolled sheet) after the hot rolling at a temperature of 800 to 1250°C for 5 seconds or longer, more preferably at a temperature of 900 to 1150°C for 10 to 180 seconds. Further, to prevent the formation of ridging by increasing the recrystallization ratio, it is desirable to use an average heating rate of 1°C/s or higher between 600 and 800°C. From the viewpoint of controlling the configurations of the second phase and precipitates, it is preferable to cool the sheet in the temperature range of 800 to 350°C at a cooling rate of 5 to 100°C/s, more preferably, at a cooling rate of 15 to 80°C/s after the soaking.

Next, the steel sheet ( hot-rolled sheet) after the hot rolling or the hot-band annealing is preferably subjected to descaling to remove an oxide film formed during the hot rolling from the steel sheet surface. The descaling method can use commonly known methods such as pickling using heated acid, mechanical descaling that mechanically removes the scale, or a method combining these two.

The hot-rolled sheet from which the scale was removed is cold rolled once, or two or more times with an intermediate annealing between each rolling to form a cold-rolled sheet with a final sheet thickness. The intermediate annealing is preferable to use the condition where the sheet is held at a temperature of 800 to 1250°C for 5 seconds or longer. When the temperature is lower than 800°C, the recrystallization grains may become too small, decreasing the Goss-nuclei in the primary recrystallization texture and deteriorating the magnetic properties. Whereas, when the temperature exceeds 1250°C, the inhibitor may grow or decompose rapidly, also deteriorating the magnetic properties. A more preferable condition is to hold at a temperature in the range of 900 to 1150°C for 10 to 180 seconds.

From the viewpoint of controlling the configurations of the second phase and precipitates, the cooling after the soaking is preferably conducted from 800 to 350°C at a rate of 5 to 100°C/s, and more preferably at a cooling rate of 15 to 80°C/s. When intermediate annealing is carried out, it is preferable to remove the rolling oil beforehand. It is also preferable to remove the scale that was formed during the annealing from the steel sheet surface after the intermediate annealing. The descaling method may use commonly known methods such as pickling using heated acid, mechanical descaling that mechanically removes the scale, or a method combining these two.

A lubricant such as rolling oil is preferably used in the cold rolling to decrease the rolling load and to improve the steel sheet shape after the rolling. From the viewpoint of controlling the texture, when the cold rolling is performed once to achieve the final sheet thickness, the total rolling reduction in the cold rolling is preferably in the range of 50 to 92%. Whereas, when the cold rolling is performed two or more times, the total rolling reduction of the final cold rolling to reach a final sheet thickness is preferably in the range of 50 to 92%.

The steel sheet (cold-rolled sheet) that was cold-rolled to the final sheet thickness is then subjected to primary recrystallization annealing which also serves as decarburization annealing. Before the treatment, it is desirable to clean the steel sheet surface by degreasing or pickling. A preferable condition for the decarburization annealing in the primary recrystallization annealing is to hold the sheet at a temperature of 750 to 950°C for 10 seconds or longer, more preferably, at a temperature of 800 to 900°C for 30 to 180 seconds. The atmosphere for the decarburization annealing preferably uses a wet atmosphere including H₂ and N₂ and having a dew point in the range of 20 to 80°C, more preferably in the range of 40 to 70°C. As a result of the decarburization annealing, the C content in the steel is reduced to 0.0050 mass% or less, which is unlikely to cause magnetic aging.

An annealing separator mainly composed of MgO is preferably applied to the surface of the steel sheet resulting from the primary recrystallization annealing with a coating weight of 3 g/m² or more per side. The upper limit of the coating weight is not particularly limited but is preferably approximately 10 g/m² from the viewpoint of production costs. MgO may be applied to the steel sheet surface in a slurry form or may be applied in a dry form through electrostatic application. When using the slurry form, the temperature of the slurry solution is preferably maintained at 15°C or lower to prevent the viscosity of the slurry from increasing. Also, the slurry solution is preferably preserved separately in a mixing tank and a solution tank used for the application to maintain the slurry concentration at a constant level. Note that "an annealing separator mainly composed of MgO" means that the MgO content is 60 mass% or more in the annealing separator as a whole.

The steel sheet coated with the annealing separator is subsequently wound into a coil, and subjected to finishing annealing in an upended state to develop secondary recrystallization grains and form a forsterite coating on the steel sheet surface. It is preferable to wind a band or the like around the outer circumference of the coil to prevent the outer winding from being unwound.

The finishing annealing is preferably conducted by heating the sheet to 800°C or higher to complete the secondary recrystallization. When forming the forsterite coating on the steel sheet surface, it is preferable to heat the sheet to 1050°C or higher. To eliminate the inhibitor-forming ingredients and impurities from the steel and to achieve excellent magnetic properties, it is preferable to conduct purification by holding the sheet at a temperature of 1050 to 1300°C for 3 hours or longer. The purification can reduce the inhibitor-forming ingredients to a level of impurities. For a part of the temperature range of 800°C or higher including the purification where the sheet is held at a temperature of 1050 to 1300°C for 3 hours or longer, it is preferable to use an H₂-containing atmosphere.

After finishing annealing, it is preferable to remove the unreacted annealing separator from the surface of the steel sheet by washing with water, brushing, or pickling, and then conduct flattening annealing to correct a winding curl and shape defects of the steel sheet that occurred during the finishing annealing and to also decrease iron loss.

Grain-oriented electrical steel sheets are often used in a laminated state, and in this case, an insulation coating is preferably formed on the steel sheet surface to secure the insulation properties. The insulation coating can preferably use a tension-applying type, which has the effect of decreasing the iron loss, and may be formed on the steel sheet surface by applying coating liquid before the flattening annealing and baking it during the flattening annealing or may be formed in another line. To enhance coating adhesion and achieve a higher iron loss decreasing effect, other methods may be applied. These methods include forming a tension-applying coating via a binder or vapor-depositing an inorganic matter on a steel sheet surface layer using a physical vapor deposition scheme or a chemical vapor deposition scheme.

To further reduce the iron loss, a magnetic domain segmentation treatment may be performed in any one of the steps after the cold rolling by forming grooves with an etching process on the steel sheet surface, by forming a thermal strain region by emitting thermal energy beams of laser, plasma, or the like on the steel sheet surface after the formation of the insulation coating, or by forming a processing strain region by pressing a roller having protrusions or the like against the steel sheet surface.

### Example 1

Twelve steel slabs of a thickness of 200 mm were prepared for steel produced with an ingredient composition containing the following ingredients: C: 0.06 mass%, Si: 3.4 mass%, Mn: 0.10 mass%, S: 0.002 mass%, Se: 0.020 mass%, sol. Al: 0.030 mass%, and N: 0.011 mass% with the remaining part including Fe and inevitable impurities. The slab was then heated to 1440°C and underwent three passes of hot rough rolling. Table 3 shows the rolling direction, rolling temperature, and sheet thickness after the rolling for each pass and the total rolling reduction of the rough rolling. The sheet was then subjected to 7 passes of hot finishing rolling to form a hot-rolled sheet of a thickness of 2.4 mm, cooled with water, and wound into a coil at a temperature of 500°C.

Three hot-rolled coils were produced for each of the hot rough rolling conditions shown in Table 3. Of the three coils, one was left as it was after the hot rolling. Another one of the other two was subjected to hot-band annealing including heating the steel sheet in a continuous annealing furnace to 1000°C at an average heating rate of 1°C/s between 600 and 800°C, holding at the temperature for 30 seconds, and cooling with water from 800°C to 350°C at a rate of 20°C/s. The remaining one was subjected to hot-band annealing that involves heating the steel sheet in a continuous annealing furnace to 1000°C at an average heating rate of 20°C/s between 600 and 800°C, and holding at the temperature for 30seconds, and cooling with water at a rate of 20°C/s between 800°C and 350°C.

The degree of ridging of each of the hot-rolled sheets and hot-band annealed sheets obtained as above was evaluated in the same manner as in Experiment 1, and the maximum height roughness value Rz obtained was also shown in Table 3. As can be seen from these results, Rz reached 50 µm or less after the tensile test of the hot-rolled sheet that was produced under the production conditions in accordance with the present invention, indicating that ridging is significantly prevented. Also, the hot-band annealed sheet produced under production conditions in accordance with the present invention exhibits Rz of 20 µm or less after the tensile test, indicating that ridging can be further prevented.

**[Table 3]**

| 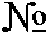 | Rough rolling items | Slab thickness (mm) | Rough rolling conditions | | | | Without hot-band annealing | | | With hot-band annealing : 1°C/s | | | With hot-band annealing : 20°C/s | | |
|---|---|---|---|---|---|---|---|---|---|---|---|---|---|---|---|
| | | | 1st pass | 2nd pass | 3rd pass | Total rolling reduction (%) | Rz(µm) of hot-rolled sheet | Magnetic flux density Bs(T) of product sheet | Remarks | Rz(µm) of hot-band annealed sheet | Magnetic flux density B₈ (T) of product sheet | Remarks | Rz(µm) of hot-band annealed sheet | Magnetic flux density B₈ (T) of product sheet | Remarks |
| R | Rolling direction | 200 | → | → | → | 85.0 | 84 | 1.82 | Comparative Example | 78 | 1.83 | Comparative Example | 72 | 1.83 | Comparative Example |
| | Rolling temperature(°C) | | 1280 | 1260 | 1240 | | | | | | | | | | |
| | Sheet thickness after rolling (mm) | | 130 | 70 | 30 | | | | | | | | | | |
| | Time after previous pass(s) | | - | 5 | 5 | | | | | | | | | | |
| S | Rolling direction | 200 | → | ← | → | 85.0 | 41 | 1.87 | Invention Example | 15 | 1.90 | Invention Example | 13 | 1.91 | Invention Example |
| | Rolling temperature(°C) | | 1280 | 1260 | 1240 | | | | | | | | | | |
| | Sheet thickness after rolling(mm) | | 130 | 70 | 30 | | | | | | | | | | |
| | Time after previous pass(s) | | - | 5 | 5 | | | | | | | | | | |
| T | Rolling direction | 200 | → | → | ← | 85.0 | 45 | 1.87 | Invention Example | 19 | 1.90 | Invention Example | 18 | 1.91 | Invention Example |
| | Rolling temperature(°C) | | 1280 | 1260 | 1240 | | | | | | | | | | |
| | Sheet thickness after rolling(mm) | | 130 | 70 | 30 | | | | | | | | | | |
| | Time after previous pass(s) | | - | 5 | 5 | | | | | | | | | | |
| U | Rolling direction | 200 | → | ← | ← | 85.0 | 40 | 1.88 | Invention Example | 13 | 1.90 | Invention Example | 10 | 1.92 | Invention Example |
| | Rolling temperature(°C) | | 1280 | 1260 | 1240 | | | | | | | | | | |
| | Sheet thickness after rolling(mm) | | 130 | 70 | 30 | | | | | | | | | | |
| | Time after previous pass(s) | | - | 5 | 5 | | | | | | | | | | |

| | | | | | | | | | | | | | | | |
|---|---|---|---|---|---|---|---|---|---|---|---|---|---|---|---|
| NOTE: -> AND <- INDICATE THE OPPOSITE ROLLING DIRECTIONS. | | | | | | | | | | | | | | | |

Experiments were carried out by using various types of hot-rolled sheets and hot-band annealed sheets thus obtained to evaluate the magnetic properties of the final product sheets. Specifically, the hot-rolled sheet and hot-band annealed sheet were each pickled to remove scale from the surface and subjected to cold rolling to achieve an intermediate sheet thickness of 1.2 mm. The sheet was then subjected to intermediate annealing involving holding the sheet at 1000°C for 120 seconds and cooling the sheet with water from 800°C to 350°C at a rate of 30°C/s, followed by pickling, and then subjected to cold rolling for the second time to obtain a cold-rolled sheet with a final sheet thickness of 0.18 mm. The cold-rolled sheet was then subjected to primary recrystallization annealing which also served as decarburization annealing at 900°C for 80 seconds under a wet atmosphere containing H₂ and N₂ and having a dew point of 55°C. After an annealing separator mainly composed of MgO was applied to the steel sheet surface with a coating weight of 5 g/m² per surface and dried, the cold-rolled sheet was subjected to finishing annealing by causing secondary recrystallization and by performing purification that held the sheet at 1220°C for 5 hours. An atmosphere mainly composed of H₂ was used in the temperature range of 1000°C or higher in the finishing annealing. After the unreacted annealing separator was removed from the surface of the steel sheet resulting from the finishing annealing, a phosphate-based insulation tension coating was applied thereto, and flattening annealing which also served as the baking of the coating and steel sheet shape correction was carried out to thus obtain a product sheet.

Test specimens for the measurement of magnetic properties were taken from both the innermost and the outermost winding parts of the thus-obtained product coil to measure the magnetic flux density B₈ at a magnetic force of 800 Aim according to the method defined by JIS C 2550-1 (2011). The lowest value of the magnetic flux density of each coil was determined as a coil-specific guaranteed value. Table 3 shows the results as well. From these results, it can be seen that all the product sheets using the hot-rolled sheets produced under the conditions in accordance with the present invention achieve an excellent magnetic flux density of B₈ ≥ 1.87 T; and that all the product sheets using the hot-band annealed sheets produced under the conditions in accordance with the present invention achieve a further excellent magnetic flux density B₈ ≥ 1.90 T. Moreover, it can be seen that the higher the heating rate in the hot-band annealing, the more the magnetic flux density is increased.

### Example 2

Two steel slabs of a thickness of 250 mm were produced for each of the steels having an ingredient composition containing ingredients shown in Table 4 and the remaining part containing Fe and inevitable impurities. Each slab was then heated to 1400°C and subjected to 5 passes of rough hot rolling. Table 5 shows the rolling direction, rolling temperature, and sheet thickness after the rolling for each pass and the total rolling reduction of the rough rolling. The sheet was then subjected to 7 passes of hot finishing rolling to form a hot-rolled sheet of a thickness of 2.2 mm, cooled with water, and wound into a coil at a temperature of 600°C. Two hot-rolled coils were produced for each ingredient composition in Table 4; one was left as a hot-rolled sheet and the other was subjected to hot-band annealing involving heating in a continuous annealing furnace to 1050 °C at an average heating rate of 10°C/s for the range of 600 to 800°C, holding at the temperature for 30 seconds, and cooling with water at 30°C/s between 800 and 350°C.

The degree of ridging of each of the hot-rolled sheets and hot-band annealed sheets obtained as above was evaluated in the same manner as in Experiment 1, and the maximum height roughness value Rz obtained was also shown in Table 4. As can be seen from these results, all the hot-rolled sheets produced under the conditions according to the present invention exhibit Rz of 50 µm or less, indicating that ridging is significantly prevented. Also, all the hot-band annealed sheets produced under production conditions in accordance with the present invention exhibit Rz of 20 µm or less, indicating that ridging can be further inhibited.

**[Table 4-1]**

| 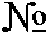 | Ingredient composition (mass %) of slab | | | | | | | | | Without hot-band annealing | | | With hot-band annealing | | |
|---|---|---|---|---|---|---|---|---|---|---|---|---|---|---|---|
| | C | Si | Mn | sol.Al | N | S | Se | S+Se | Others | Rz (µm) of hot-rolled sheet | Magnetic flux density Bs(T) of product sheet | Remarks | Rz(µm) of hot-band annealed sheet | Magnetic flux density Bs(T) of product sheet | Remarks |
| 1 | 0.01 | 3.3 | 0.11 | 0.019 | 0.007 | 0.005 | 0.000 | 0.005 | - | 43 | 1.7 | Comparative Example | 13 | 1.72 | Comparative Example |
| 2 | 0.02 | 3.2 | 0.10 | 0.017 | 0.009 | 0.005 | 0.000 | 0.005 | - | 40 | 1.87 | Invention Example | 19 | 1.90 | Invention Example |
| 3 | 0.06 | 3.4 | 0.12 | 0.020 | 0.007 | 0.006 | 0.023 | 0.029 | - | 41 | 1.88 | Invention Example | 17 | 1.91 | Invention Example |
| 4 | 0.10 | 3.3 | 0.10 | 0.018 | 0.008 | 0.007 | 0.018 | 0.025 | - | 40 | 1.87 | Invention Example | 12 | 1.90 | Invention Example |
| 5 | 0.12 | 3.4 | 0.08 | 0.020 | 0.007 | 0.006 | 0.021 | 0.027 | - | 43 | 1.66 | Comparative Example | 16 | 1.67 | Comparative Example |
| 6 | 0.06 | 1.6 | 0.10 | 0.021 | 0.008 | 0.006 | 0.000 | 0.006 | - | 39 | 1.73 | Comparative Example | 13 | 1.75 | Comparative Example |
| 7 | 0.05 | 2.6 | 0.12 | 0.019 | 0.006 | 0.005 | 0.000 | 0.005 | - | 47 | 1.89 | Invention Example | 11 | 1.91 | Invention Example |
| 8 | 0.07 | 3.3 | 0.08 | 0.020 | 0.006 | 0.007 | 0.000 | 0.007 | - | 38 | 1.88 | Invention Example | 17 | 1.91 | Invention Example |
| 9 | 0.06 | 5.3 | 0.12 | 0.019 | 0.006 | 0.006 | 0.000 | 0.006 | - | 40 | 1.87 | Invention Example | 13 | 1.90 | Invention Example |
| 10 | 0.07 | 6.0 | 0.11 | 0.021 | 0.008 | 0.007 | 0.000 | 0.007 | - | 46 | 1.80 | Comparative Example | 15 | 1.80 | Comparative Example |
| 11 | 0.06 | 3.3 | 0.00 | 0.023 | 0.006 | 0.006 | 0.019 | 0.025 | - | 44 | 1.74 | Comparative Example | 17 | 1.75 | Comparative Example |
| 12 | 0.05 | 3.2 | 0.01 | 0.017 | 0.007 | 0.004 | 0.021 | 0.025 | - | 41 | 1.88 | Invention Example | 11 | 1.91 | Invention Example |
| 13 | 0.06 | 3.4 | 0.10 | 0.023 | 0.008 | 0.001 | 0.000 | 0.001 | - | 36 | 1.88 | Invention Example | 8 | 1.90 | Invention Example |
| 14 | 0.07 | 3.6 | 0.26 | 0.020 | 0.008 | 0.006 | 0.018 | 0.024 | - | 37 | 1.87 | Invention Example | 13 | 1.90 | Invention Example |
| 15 | 0.06 | 3.5 | 0.37 | 0.018 | 0.006 | 0.007 | 0.016 | 0.023 | - | 44 | 1.68 | Comparative Example | 10 | 1.68 | Comparative Example |
| 16 | 0.08 | 3.4 | 0.10 | 0.020 | 0.005 | 0.000 | 0.000 | 0.000 | - | 47 | 1.71 | Comparative Example | 12 | 1.72 | Comparative Example |
| 17 | 0.06 | 3.3 | 0.09 | 0.018 | 0.005 | 0.001 | 0.000 | 0.001 | - | 41 | 1.87 | Invention Example | 15 | 1.90 | Invention Example |
| 18 | 0.06 | 3.4 | 0.08 | 0.020 | 0.007 | 0.007 | 0.000 | 0.007 | - | 38 | 1.88 | Invention Example | 13 | 1.91 | Invention Example |
| 19 | 0.07 | 3.3 | 0.12 | 0.018 | 0.009 | 0.035 | 0.000 | 0.035 | - | 38 | 1.88 | Invention Example | 6 | 1.91 | Invention Example |
| 20 | 0.05 | 3.4 | 0.12 | 0.021 | 0.008 | 0.042 | 0.000 | 0.042 | - | 47 | 1.72 | Comparative Example | 13 | 1.75 | Comparative Example |
| 21 | 0.06 | 3.2 | 0.11 | 0.018 | 0.007 | 0.000 | 0.001 | 0.001 | - | 45 | 1.87 | Invention Example | 15 | 1.90 | Invention Example |
| 22 | 0.06 | 3.3 | 0.12 | 0.016 | 0.009 | 0.000 | 0.021 | 0.021 | - | 40 | 1.88 | Invention Example | 17 | 1.91 | Invention Example |
| 23 | 0.06 | 3.2 | 0.10 | 0.018 | 0.007 | 0.000 | 0.036 | 0.036 | - | 48 | 1.87 | Invention Example | 13 | 1.90 | Invention Example |
| 24 | 0.07 | 3.4 | 0.09 | 0.020 | 0.006 | 0.000 | 0.045 | 0.045 | - | 41 | 1.68 | Comparative Example | 11 | 1.70 | Comparative Example |

**[Table 4-2]**

| 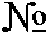 | Ingredient composition (mass %) of slab | | | | | | | | | Without hot-band annealing | | | With hot-band annealing | | |
|---|---|---|---|---|---|---|---|---|---|---|---|---|---|---|---|
| | C | Si | Mn | sol.Al | N | S | Se | S+Se | Others | Rz(µm) of hot-rolled sheet | Magnetic flux density Bs(T) of product sheet | Remarks | Rz(µm) of hot-band annealed sheet | Magnetic flux density Bs(T) of product sheet | Remarks |
| 25 | 0.07 | 3.4 | 0.09 | 0.018 | 0.005 | 0.028 | 0.020 | 0.048 | - | 41 | 1.70 | Comparative Example | 16 | 1.72 | Comparative Example |
| 26 | 0.08 | 3.3 | 0.08 | 0.004 | 0.006 | 0.005 | 0.021 | 0.026 | - | 46 | 1.70 | Comparative Example | 15 | 1.77 | Comparative Example |
| 27 | 0.06 | 3.2 | 0.10 | 0.010 | 0.008 | 0.006 | 0.019 | 0.025 | - | 43 | 1.87 | Invention Example | 13 | 1.90 | Invention Example |
| 28 | 0.05 | 3.4 | 0.12 | 0.019 | 0.010 | 0.006 | 0.018 | 0.024 | - | 39 | 1.88 | Invention Example | 12 | 1.91 | Invention Example |
| 29 | 0.06 | 3.3 | 0.11 | 0.038 | 0.009 | 0.007 | 0.000 | 0.007 | - | 38 | 1.88 | Invention Example | 16 | 1.91 | Invention Example |
| 30 | 0.06 | 3.3 | 0.12 | 0.043 | 0.008 | 0.008 | 0.021 | 0.029 | - | 43 | 1.69 | Comparative Example | 11 | 1.74 | Comparative Example |
| 31 | 0.07 | 3.4 | 0.10 | 0.020 | 0.002 | 0.005 | 0.021 | 0.026 | - | 42 | 1.70 | Comparative Example | 18 | 1.75 | Comparative Example |
| 32 | 0.06 | 3.4 | 0.11 | 0.021 | 0.004 | 0.004 | 0.000 | 0.004 | - | 49 | 1.87 | Invention Example | 7 | 1.90 | Invention Example |
| 33 | 0.06 | 3.3 | 0.10 | 0.020 | 0.010 | 0.006 | 0.000 | 0.006 | - | 43 | 1.88 | Invention Example | 18 | 1.90 | Invention Example |
| 34 | 0.04 | 3.5 | 0.09 | 0.023 | 0.018 | 0.007 | 0.000 | 0.007 | Sn:0.05,Cr:0.05, P:0.05,V:0.003, B:0.0009, Bi:0.01 | 42 | 1.88 | Invention Example | 13 | 1.91 | Invention Example |
| 35 | 0.06 | 3.6 | 0.10 | 0.018 | 0.026 | 0.005 | 0.000 | 0.005 | Ni:0.02, Sn:0.12, Cu:0.05, Cr:0.12, P:0.01, Mo:0.01 | 46 | 1.70 | Comparative Example | 15 | 1.78 | Comparative Example |
| 36 | 0.05 | 3.4 | 0.10 | 0.020 | 0.006 | 0.026 | 0.000 | 0.026 | Sn:0.12, Cr:0.05, P:0.01, V:0.002, B:0.0013, Bi:0.02 | 41 | 1.91 | Invention Example | 6 | 1.93 | Invention Example |
| 37 | 0.07 | 3.6 | 0.10 | 0.018 | 0.008 | 0.007 | 0.017 | 0.024 | Ni:0.02, Sn:0.06, Cu:0.10, Cr:0.14, P:0.03, Mo:0.01 | 43 | 1.90 | Invention Example | 13 | 1.94 | Invention Example |
| 38 | 0.08 | 3.4 | 0.10 | 0.023 | 0.009 | 0.005 | 0.020 | 0.025 | Sb:0.008, Sn:0.15, P:0.07, Mo:0.01, V:0.06 | 46 | 1.91 | Invention Example | 4 | 1.93 | Invention Example |
| 39 | 0.07 | 3.3 | 0.09 | 0.026 | 0.007 | 0.022 | 0.000 | 0.022 | Sb:0.03, Cr:0.05, P:0.01, Mo:0.15, B:0.0007 | 38 | 1.90 | Invention Example | 8 | 1.93 | Invention Example |
| 40 | 0.06 | 3.3 | 0.07 | 0.024 | 0.008 | 0.007 | 0.000 | 0.007 | Sb:0.08, Cu:0.06, P:0.01, Mo:0.02, Nb:0.0029 | 46 | 1.90 | Invention Example | 12 | 1.94 | Invention Example |
| 41 | 0.06 | 3.5 | 0.10 | 0.020 | 0.006 | 0.005 | 0.017 | 0.022 | Sn:0.06, Cu:0.05, P:0.05, Cr:0.12, Mo:0.02 | 41 | 1.91 | Invention Example | 16 | 1.93 | Invention Example |
| 42 | 0.07 | 3.3 | 0.12 | 0.022 | 0.009 | 0.007 | 0.017 | 0.024 | Ni:0.02, Sn:0.10, P:0.01, Mo:0.05, Zr:0.001 | 46 | 1.91 | Invention Example | 15 | 1.93 | Invention Example |
| 43 | 0.08 | 3.4 | 0.11 | 0.026 | 0.008 | 0.006 | 0.018 | 0.024 | Sb:0.05, Cu:0.08, Cr:0.05, P:0.01, Mo:0.01 | 39 | 1.92 | Invention Example | 10 | 1.93 | Invention Example |
| 44 | 0.07 | 3.6 | 0.10 | 0.023 | 0.007 | 0.005 | 0.018 | 0.023 | Ni:0.20, Sn:0.06, Cr:0.08, P:0.03, Bi:0.01 | 45 | 1.91 | Invention Example | 6 | 1.93 | Invention Example |
| 45 | 0.06 | 3.5 | 0.07 | 0.024 | 0.008 | 0.028 | 0.000 | 0.028 | Sn:0.23, Ni:0.27, Cr:0.10, P:0.01, Zr:0.05 | 44 | 1.90 | Invention Example | 11 | 1.94 | Invention Example |
| 46 | 0.07 | 3.3 | 0.08 | 0.022 | 0.009 | 0.006 | 0.016 | 0.022 | Sb:0.03, Cu:0.15, P:0.01, Mo:0.02 | 42 | 1.91 | Invention Example | 16 | 1.93 | Invention Example |
| 47 | 0.07 | 3.3 | 0.09 | 0.026 | 0.006 | 0.005 | 0.018 | 0.023 | Sb:0.03, Cu:0.15, P:0.01, Nb:0.02 | 41 | 1.90 | Invention Example | 13 | 1.93 | Invention Example |

**[Table 4-3]**

| 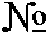 | Ingredient composition (mass %) of slab | | | | | | | | | Without hot-band annealing | | | With hot-band annealing | | |
|---|---|---|---|---|---|---|---|---|---|---|---|---|---|---|---|
| | C | Si | Mn | sol.Al | N | S | Se | S+Se | Others | Kz(µm) of hot-rolled sheet | Magnetic flux density B₈(T) of product sheet | Remarks | Rz(µm) of hot-band annealed sheet | Magnetic flux density B₈(T) of product sheet | Remarks |
| 48 | 0.06 | 3.4 | 0.12 | 0.016 | 0.006 | 0.003 | 0.000 | 0.003 | Sn:0.08,P:0.007,Co:0.003,Zn:0.018 | 44 | 1.92 | Invention Example | 10 | 1.95 | Invention Example |
| 49 | 0.05 | 3.4 | 0.17 | 0.023 | 0.008 | 0.007 | 0.000 | 0.007 | Sn:0.12,P:0.011,Pb:0.0003,W:0.008 | 42 | 1.92 | Invention Example | 11 | 1.95 | Invention Example |
| 50 | 0.05 | 3.4 | 0.10 | 0.029 | 0.009 | 0.028 | 0.000 | 0.028 | Sn:0.27,P:0.014,As:0.0013,Ge:0.0045 | 40 | 1.93 | Invention Example | 8 | 1.96 | Invention Example |
| 51 | 0.06 | 3.5 | 0.09 | 0.024 | 0.008 | 0.033 | 0.000 | 0.033 | Sb:0.02,P:0.012,Co:0.047, Ga:0.0043 | 43 | 1.92 | Invention Example | 9 | 1.95 | Invention Example |
| 52 | 0.07 | 3.3 | 0.11 | 0.013 | 0.007 | 0.004 | 0.007 | 0.011 | Sb:0.05,P:0.01,Pb:0.008,Zn:0.0016 | 43 | 1.92 | Invention Example | 10 | 1.95 | Invention Example |
| 53 | 0.05 | 3.5 | 0.15 | 0.027 | 0.008 | 0.009 | 0.017 | 0.026 | Sb:0.08,P:0.05,Ge:0.0004,As:0.018 | 42 | 1.93 | Invention Example | 11 | 1.96 | Invention Example |
| 54 | 0.06 | 3.6 | 0.13 | 0.019 | 0.006 | 0.024 | 0.012 | 0.036 | Sb:0.17,P:0.002,W:0.0016,Ga:0.0002 | 43 | 1.92 | Invention Example | 10 | 1.95 | Invention Example |

**[Table 5]**

| Rough rolling items | Slab thickness (mm) | Rough rolling conditions | | | | | |
|---|---|---|---|---|---|---|---|
| | | 1st pass | 2nd pass | 3rd pass | 4th pass | 5th pass | Total rolling reduction (%) |
| Rolling direction | 250 | → | ← | → | ← | → | 84.0 |
| Rolling temperature (°C) | | 1280 | 1270 | 1260 | 1250 | 1240 | |
| Sheet thickness after rolling(mm) | | 200 | 150 | 110 | 70 | 40 | |
| Time after previous pass (s) | | - | 5 | 5 | 5 | 5 | |

| | | | | | | | |
|---|---|---|---|---|---|---|---|
| Note: → AND ← INDICATE THE OPPOSITE ROLLING DIRECTIONS. | | | | | | | |

Experiments were carried out by using various types of hot-rolled sheets and hot-band annealed sheets thus obtained to evaluate the magnetic properties of the final product sheets. Specifically, the hot-rolled sheet and hot-band annealed sheet were pickled to remove scale from the surface and subjected to cold rolling to achieve an intermediate sheet thickness of 1.8 mm. The sheet was then subjected to intermediate annealing involving holding the sheet at 1100°C for 60 seconds and cooling the sheet with water from 800°C to 350°C at a rate of 60°C/s, followed by pickling, and then subjected to cold rolling for the second time to obtain a cold-rolled sheet with a final sheet thickness of 0.23 mm. The cold-rolled sheet was then subjected to primary recrystallization annealing which also served as decarburization annealing at 880°C for 100 seconds under a wet atmosphere containing H₂ and N₂ and having a dew point of 60°C. After an annealing separator mainly composed of MgO was applied to the steel sheet surface with a coating weight of 6 g/m² per surface and dried, the cold-rolled sheet was subjected to finishing annealing by causing secondary recrystallization and by performing purification that held the sheet at 1200°C for 5 hours. An atmosphere mainly composed of H₂ was used in the temperature range of 1000°C or higher in the finishing annealing. After the unreacted annealing separator was removed from the surface of the steel sheet resulting from the finishing annealing, a phosphate-based insulation tension coating was applied thereto, and flattening annealing which also served as the baking of the coating and steel sheet shape correction was carried out to thus obtain a product sheet.

Test specimens for the measurement of magnetic properties were taken from both the innermost and the outermost winding parts of the thus-obtained product coil to measure the magnetic flux density B₈ at a magnetic force of 800 Aim according to the method defined by JIS C 2550-1 (2011). The lowest value of the magnetic flux density of each coil was determined as a coil-specific guaranteed value. Table 4 shows the results as well. From these results, it can be seen that all the product sheets using the hot-rolled sheets produced under the conditions in accordance with the present invention achieve an excellent magnetic flux density of B₈ ≥ 1.87 T when hot-band annealing was not carried out and of B₈ ≥ 1.90 T when hot-band annealing was carried out. Further, irrespective of the hot-band annealing being carried out, the product sheets with appropriate ingredients added in addition to the required ones exhibit a further excellent magnetic flux density of B₈ ≥ 1.90 T when hot-band annealing was not carried out and of B₈ ≥ 1.90 T when hot-band annealing was carried out.

## Claims

1. A method for producing a grain-oriented electrical steel sheet **characterized in** comprising steps of:
heating a steel slab having an ingredient composition containing C: 0.02 to 0.10 mass%, Si: 2.5 to 5.5 mass%, Mn: 0.01 to 0.30 mass%, sol. Al: 0.010 to 0.040 mass%, N: 0.004 to 0.020 mass%, and at least one of S and Se in a total amount of 0.001 to 0.040 mass% with a remaining part comprising Fe and inevitable impurities;
hot rolling the slab;
subjecting the hot-rolled sheet to, optionally, hot-band annealing and then to one cold rolling or two or more cold rollings with an intermediate annealing between each cold rolling to form a cold-rolled sheet with a final sheet thickness;
subjecting the cold-rolled sheet to primary recrystallization annealing which also serves as decarburization annealing;
applying an annealing separator to the steel sheet surface; and
subjecting the sheet to finishing annealing, wherein
the slab is heated to 1300°C or higher;
in rough rolling of the hot rolling, any one of the rolling passes is conducted in a temperature range of 1200°C or higher, and after 5 seconds or longer has elapsed, the next rolling pass is performed in the opposite direction, with the total rolling reduction of the rough rolling of 75% or more achieved.

2. The method for producing a grain-oriented electrical steel sheet according to claim 1, wherein
after the hot rolling, the hot-band annealing is performed by heating the sheet at an average heating rate of 1°C/s or higher between 600°C and 800°C and holding the sheet at a temperature of 800 to 1250°C.

3. The method for producing a grain-oriented electrical steel sheet according to claim 1 or 2, the method further comprises:
a hot rolling step including heating a steel slab, performing rough rolling of one or more passes in a temperature range of 1100 to 1400°C, performing finishing rolling of two or more passes in a temperature range of 800 to 1300°C to obtain a hot-rolled sheet, and winding the sheet into a coil at a winding temperature of 400 to 750°C;
optionally, a hot-band annealing step including holding the hot-rolled sheet in the temperature range of 800 to 1250°C for 5 seconds or longer and then cooling the sheet at a rate of 5 to 100°C/s between 800 and 350°C;
a cold rolling step including one cold rolling performed so that a total rolling reduction falls within the range of 50 to 92%, or including two or more cold rollings performed so that a total rolling reduction at the final cold rolling for obtaining the final sheet thickness falls within the range of 50 to 92%;
optionally, an intermediate annealing step including holding the sheet in a temperature range of 800 to 1250°C for 5 seconds or longer and then cooling the sheet at a rate of 5 to 100°C/s between 800 and 350°C;
a primary recrystallization annealing step serving as decarburization annealing including holding the sheet in a temperature range of 750 to 950°C for 10 seconds or longer under a wet atmosphere containing H₂ and N₂ and having a dew point of 20 to 80°C;
an annealing separator applying step including applying an annealing separator mainly composed of MgO to a surface of the steel sheet in an amount of 3 g/m² or more per surface; and
a finishing annealing step that comprises purification where the sheet is held at a temperature of 1050°C to 1300°C for 3 hours or longer and that uses an H₂-containing atmosphere for a part of a temperature range of 800°C or higher including at least the purification.

4. The method for producing a grain-oriented electrical steel sheet according to any one of claims 1 to 3, wherein
the steel slab to be used contains, in addition to the above ingredient composition, at least one selected from the group consisting of Ni: 0 to 1.00 mass%, Sb: 0 to 0.50 mass%, Sn: 0 to 0.50 mass%, Cu: 0 to 0.50 mass%, Cr: 0 to 0.50 mass%, P: 0 to 0.50 mass%, Mo: 0 to 0.50 mass%, Nb: 0 to 0.020 mass%, V: 0 to 0.010 mass%, B: 0 to 0.0025 mass%, Bi: 0 to 0.50 mass%, and Zr: 0 to 0.10 mass%.

5. The method for producing a grain-oriented electrical steel sheet according to any one of claims 1 to 4, wherein
the steel slab contains, in addition to the ingredient composition, at least one selected from the group consisting of Co: 0 to 0.0500 mass% and Pb: 0 to 0.0100 mass%.

6. The method for producing a grain-oriented electrical steel sheet according to any one of claims 1 to 5, wherein
the steel slab contains, in addition to the ingredient composition, at least one selected from the group consisting of As: 0 to 0.0200 mass%, Zn: 0 to 0.0200 mass%, W: 0 to 0.0100 mass%, Ge: 0 to 0.0050 mass%, and Ga: 0 to 0.0050 mass%.
